# EUROPÄISCHE PATENTSCHRIFT

(11) **EP 2 102 507 B1**
(45) Veröffentlichungstag und Bekanntmachung des Hinweises auf die Patenterteilung: **18.08.2010**
(21) Anmeldenummer: 07711363.7
(22) Anmeldetag: 19.01.2007
(51) Int. Cl.: F04D 29/58, F04D 29/051, F04D 29/041

(54) **STRÖMUNGSARBEITSMASCHINE**
FLUID FLOW MACHINE
POMPE À DÉPLACEMENT NON POSITIF

(43) Veröffentlichungstag der Anmeldung: 23.09.2009
(73) Patentinhaber: Daimler AG, 70327 Stuttgart (DE); Ford Global Technologies, LLC, Dearborn MI 48126 (US)
(72) Erfinder: KNOOP, Andreas, 73728 Esslingen (DE)
(74) Vertreter: JENSEN & SON
(86) Internationale Anmeldenummer: PCT/EP2007/000455
(87) Internationale Veröffentlichungsnummer: WO 2008/086826

(56) Entgegenhaltungen:
- US-A- 5 087 176
- US-A- 5 638 796
- US-A1- 2005 066 680
- US-B1- 6 231 302

## Beschreibung

Die Erfindung betrifft eine Strömungsarbeitsmaschine nach dem Oberbegriff des Anspruchs 1. Die Erfindung ist insbesondere bei Brennkraftmaschinen mit durch Abgas angetriebenen Pumpen und bei der Brennstoffversorgung von Brennstoffzellen mit einem Kompressor anwendbar.

Aus der US 5,087,176 ist ein gattungsgemäßer Turbokompressor mit einem Kompressorrad und einem Turbinenrad auf einer hohlen Welle bekannt. Zum Schutz der Wellenlagerung gegen Überhitzung zirkuliert Luft durch das Innere der Welle, wobei die Welle thermisch gegen das Turbinenrad isoliert ist. Die Kühlluft wird als Zapfluft der Druckseite des Kompressors entnommen. Bei hohen Drücken muss die Zapfluft selbst gekühlt werden, bevor sie zur Lagerkühlung verwendet werden kann.

Bei einer Gasversorgungseinheit für ein Brennstoffzellensystem nach der US 2005/0066680 A1 werden eine Steuereinheit und eine Antriebseinheit mit Kanälen ausgebildet, durch die ein Kühlmittel strömt. Ein Teil der Kanäle ist Lagern eines Rotors der Antriebseinheit zugeordnet. Die Brenngasführung für das Brennstoffzellensystem erfolgt so, dass das Brenngas eine zusätzliche Kühlwirkung auf die Rotorlagerung hat. Das Brenngas wird durch die Saugwirkung eines Flügelrades eines Turbokompressors entlang der Lagerung geführt.

Aufgabe der Erfindung ist es, eine Strömungsarbeitsmaschine zu entwickeln, die mit einem geringen Aufwand einen verbesserten Wirkungsgrad und eine verbesserte Kühlwirkung von Lagern ermöglicht.

Die Aufgabe wird mit einer Strömungsarbeitsmaschine gelöst, welche die Merkmale nach Anspruch 1 aufweist. Vorteilhafte Ausgestaltungen ergeben sich aus den Unteransprüchen.

Gemäß der Erfindung ist die Welle eines Laufrades in Radiallagern und in einem Axiallager gehalten. Das Axiallager umfasst ein umlaufendes Teil, welches als Kühlfluid-Fördereinrichtung wirkt. Das Kühlfluid wird von der Saugseite des Laufrades ausgehend zu Lagerteilen der Welle und zu weiteren zu kühlenden Bauteilen gefördert. Die Lager können als Wälzlager, Gleitlager oder Gaslager ausgebildet sein.

Insbesondere kann das Teil als Scheibe ausgeführt sein, die drehfest auf der Welle sitzt. Die Scheibe kann zum Fördern des Kühlfluids mit Schaufeln ausgestattet sein oder schraubenförmige Kanäle aufweisen. Insbesondere kann die Scheibe Hohlräume aufweisen, wobei Kanäle in Richtung einer Lagerfläche führen. Die Kanäle bzw. Radialbohrungen sind vorzugsweise radial durchströmt.

Bei einer vorteilhaften Ausführung ist die Welle hohl ausgebildet, wobei das Kühlfluid durch das Innere der Welle strömt.

Das als Kühlfluid-Fördereinrichtung ausgebildete Teil des Axiallagers verdichtet das Kühlfluid nicht so hoch, wie das Arbeitsfluid auf der Druckseite des Laufrades. Das Kühlfluid wird auf der Saugseite des Laufrades angesaugt, wo Druck und Temperatur in Bereichen liegen, die eine Verbesserung des Wirkungsgrades gestatten, weil kein Arbeitsfluid aus der Druckseite abgezweigt wird. Das als Kühlfluid mit dem Teil angesaugte Arbeitsfluid hat eine geringere Temperatur als das Arbeitsfluid auf der Druckseite, so dass die mit dem Kühlfluid umströmten Lager effizient gekühlt werden.

In einer besonders günstigen Ausgestaltung der Erfindung ist das Laufrad durch eine elektrische Maschine angetrieben. Besonders vorteilhaft ist es dabei gemäß einer Weiterbildung, wenn die elektrische Maschine, welche hier typischerweise als Motor arbeitet, von dem geförderten Kühlfluid mitgekühlt ist. Es ergeben sich dann die o.g. Vorteile hinsichtlich der Förderung und des Druckniveaus auch für das zur Motorkühlung verwendeten Kühlfluids. Außerdem kann die Motorkühlung ohne zusätzliche Kühlmedienförderung realisiert werden.

Wenn die Strömungsarbeitsmaschine mit einem Turbinenlaufrad angetrieben wird oder der Antrieb zumindest mittels eines Turbinenlaufrades unterstützt, dann ist es möglich, alternativ oder zusätzlich zum dem Kühlfluid-Förderteil des Axiallagers Kühlfluid mittels Schaufeln auf der Rückseite des Turbinenlaufrades zu fördern. In diesem Fall kann die von der Saugseite des Kompressorlaufrades geförderte Kühlluft dem Expansionsprozess der Turbine zugeführt werden.

Die Erfindung soll nachstehend anhand eines Ausführungsbeispiels erläutert werden.

Dabei zeigen:
- Fig. 1: ein Schema einer Kühlanordnung für eine Lagerung eines Laufrades einer Kompressoreinheit einer Brennstoffzellenanordnung; und
- Fig. 2: eine schematische Darstellung eines elektrischen Turboladers.

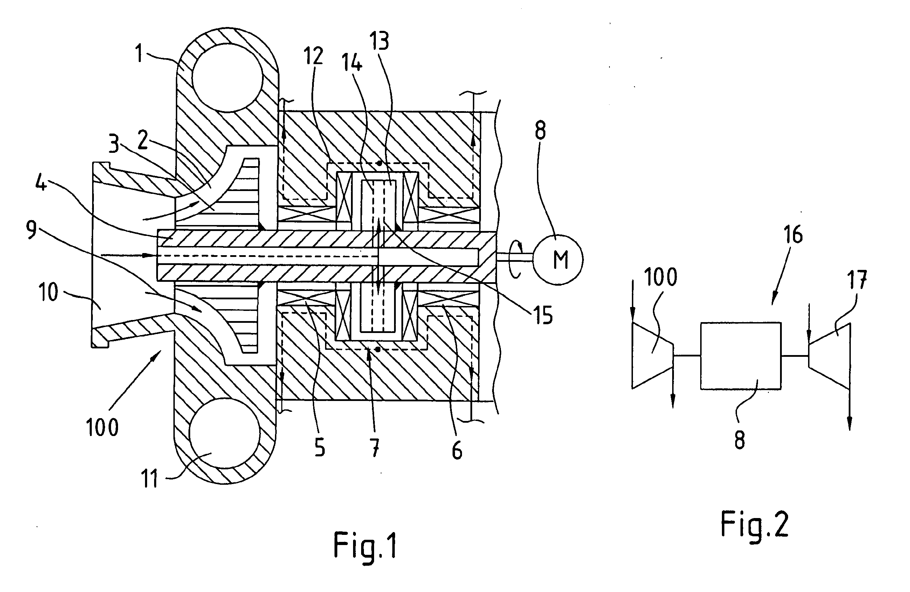

Wie aus Fig. 1 ersichtlich besteht die Kompressoreinheit 100 aus einem Gehäuse 1, welches eine Kompressionskammer 2 bildet. In der Kompressionskammer 2 läuft ein Schaufelrad 3, welches auf einer hohlen Welle 4 befestigt ist. Die Welle 4 ist durch Radiallager 5, 6 und ein Axiallager 7 drehbar in dem Gehäuse 1 gehalten. Die Radiallager 5, 6 verhindern eine Bewegung der Welle 4 quer zur Drehachse. Das Axiallager 7 verhindert eine Bewegung der Welle 4 in Achsrichtung. Die Welle 4 bzw. das Schaufelrad 3 sind beispielsweise durch eine elektrische Maschine bzw. einen Elektromotor 8 angetrieben.

Wenn sich das Schaufelrad 3 dreht, dann wird mit dem Schaufelrad 3 Gas 9 durch einen Ansaugstutzen 10 angesaugt. Auf der Druckseite des Schaufelrades 3 führen Kanäle 11 das verdichtete Gas 9 wieder ab. Das Gas 9 kann bevorzugt Luft sein, welche als Oxidationsmittel zur Kathodenseite der Brennstoffzellenanordnung gefördert wird.

Damit die Lager 5-7, bevorzugt handelt es sich dabei um Gaslager bzw. Hydrodynamische Gaslager (sog. Foil-Bearings), während des Betriebes der Kompressoreinheit nicht überhitzt werden, sind im Gehäuse 1 entlang der Lagerflächen der Lager 5-7 Kühlkanäle 12 angeordnet. Die Kühlkanäle 12 werden von Brenngas 9 durchströmt, welches dem Ansaugstutzen 10 entnommen wird. Zum Fördern des Gases 9 durch die Kühlkanäle 12 ist eine Scheibe 13 des Axiallagers 7 von Kanälen 14 durchzogen, die eine Saugwirkung auf das Gas 9 ausüben. Die Scheibe 13 sitzt drehfest auf der Welle 4. Radialbohrungen 15 in der Welle 4 verbinden das Innere der Welle 4 mit den Kanälen 14. Außerdem können in der Scheibe 13 mit den Radialbohrungen 15 verbundenen axiale Bohrungen (nicht dargestellt) vorhanden sein, welche einen Gasdurchtritt durch die Scheibe 13 in axialer Richtung (in den Bereich der Lager 7) ermöglichen.

Während des Betriebes der Kompressoreinheit wird mittels der rotierenden Scheibe 13 ein geringer Teil des Gases 9 für Kühlzwecke aus dem Ansaugstutzen 10 abgezweigt, wobei das im Vergleich zu der Druckseite relative kühle Gas 9 durch die hohle Welle 4, die Bohrungen 15 und die Kanäle 14, 12 strömt und ein Teil der Wärme von den Lagern 5-7 abzieht. Die gekühlten Lager 5-7 weisen eine erhöhte Lebensdauer auf. Das aus den Kanälen 12 stammende Gas 9 kann beispielsweise der Kathodenseite der Brennstoffzellenanordnung als Oxidationsmittel zugeführt werden. Auch eine Brenngas bzw. Wasserstoffseitige Verwendung wäre im Prinzip denkbar. Dann würde das Gas 9 der Anodenseite zugeführt werden.

Zusätzlich kann die Kühlung des Elektromotors 8 von dem Kühlfluid mit übernommen werden (in Fig. 1 nicht dargestellt). Ein gekühlter Elektromotor 8 hat dabei gegenüber einem Ungekühlten den Vorteil, dass evtl. Verluste, welche in Form von Wärme auftreten, abgeführt werden und die Maschine 8 somit nicht schädigen können. Dadurch kann auch der elektrische Aufwand bei der Ansteuerung, insbesondere die Genauigkeit der Sinuswellen, z.B. bei einem Synchronmotor, verringert werden. Evtl. anfallende elektrische Verluste aufgrund "schlechter" Sinuswellen etc. können mit minimalem Aufwand und bei Minimalem Bauraum abgeführt werden, ohne Schaden (z.B. Entmagnetisierung) an dem Elektromotor 8 anzurichten. Die Konstruktiven Ausgestaltungen eine solchen Kühlung sind für den Fachmann dabei leicht ersichtlich, z.B. eine wellennahe Führung des Kühlfluid durch Spalte oder durch eine hohle Welle, bevorzugt zum Rotor des Elektromotors 8.

In Fig. 2 ist die bevorzugte Anwendung der hier beschriebenen Strömungsmaschine als elektrischer Turbolader (Electronic Turbo Charger = ETC) 16 dargestellt. Dieser besteht im Wesentlichen aus der Kompressoreinheit 100, der elektrischen Maschine 8 und hier nicht im detail dargestellten einem Turbinenrad 17, wie es beispielsweise aus bei Verbrennungsmotoren eingesetzten Turboladern bekannt ist. Der ETC 16 dient typischerweise zur Versorgung des Kathodenbereichs einer Brennstoffzellenanordnung mit Oxidationsmittel, typischerweise Luft oder ein Gemisch aus Frischluft sowie Ablauft und/oder Abgas aus der Brennstoffzellenanordnung. Dem Turbinenrad 17 werden dabei die Abgase der Brennstoffzellenanordnung zugeleitet. Somit kann mittle des Turbinenrades 17 im System vorhandenen Druckenergie zurück gewonnen werden. Außerdem ist es denkbar die Abgase ggf. auch unter Zugabe weitern Treibstoffs, nach der Brennstoffzellenanordnung nach zu verbrennen, um ihren Energieinhalt zu steigern und die Energieausbeuten am Turbinenrad zu erhöhen.

Der ETC 16 kann dabei sowohl über das Turbinenrad 17 als auch über die elektrische Maschine 8 angetrieben werden, je nachdem, wie viel Energie am Turbinenrad verfügbar ist und wie viel zur Verdichtung des Oxidationsmittels augenblicklich benötigt wird. Bei im jeweiligen Augenblick bzw. unter den jeweiligen Betriebsbedingungen ggf. vorhandenem Energieüberschuss am Turbinenrad 17 kann die Elektromaschine 8 auch generatorisch betrieben werden. Die so erzeugte elektrische Leistung steht dann ebenfalls zur Verfügung.

Liste der verwendeten Bezugszeichen
- 100: Kompressoreinheit
- 1: Gehäuse
- 2: Kompressionskammer
- 3: Schaufelrad
- 4: Welle
- 5, 6: Radiallager
- 7: Axiallager
- 8: elektrische Maschine
- 9: Brenngas
- 10: Ansaugstutzen
- 11: Kanal
- 12: Kühlkanal
- 13: Scheibe
- 14: Kanal
- 15: Bohrung
- 16: ETC
- 17: Turbinenrad

## Patentansprüche

1. Strömungsarbeitsmaschine,
mit einem Gehäuse (1) und Anschlussstutzen (10) für ein Arbeitsfluid (9) auf einer Saugseite und einer Druckseite,
mit mindestens einem Laufrad (3) an einer Welle (4), die mit Radiallagern (5, 6) und einem Axiallager (7) in dem Gehäuse (1) gehalten ist,
und mit einer Kühlanordnung für mindestens ein Lager (5-7),
**dadurch gekennzeichnet,**
**dass** ein umlaufendes Teil (13) des Axiallagers (7) als Kühlfluid-Fördereinrichtung ausgebildet ist, wobei eine Saugverbindung zur Saugseite des Laufrades (3) führt.

2. Strömungsarbeitsmaschine nach Anspruch 1,
**dadurch gekennzeichnet,**
**dass** das Teil (13) scheibenförmig ausgebildet und drehfest auf der Welle (4) angeordnet ist.

3. Strömungsarbeitsmaschine nach Anspruch 2,
**dadurch gekennzeichnet,**
**dass** die Scheibe (13) das Fluid (9) fördernde Kanäle (14) aufweist.

4. Strömungsarbeitsmaschine nach Anspruch 3,
**dadurch gekennzeichnet,**
**dass** die Kanäle (14) vorwiegend radial durchströmt sind.

5. Strömungsarbeitsmaschine nach Anspruch 2,
**dadurch gekennzeichnet,**
**dass** die Scheibe (13) das Fluid (9) fördernde Radialbohrungen (14) aufweist.

6. Strömungsarbeitsmaschine nach Anspruch 2,
**dadurch gekennzeichnet,**
**dass** die Scheibe (13) außerdem das Fluid (9) fördernde mit den Radialbohrungen (14) verbundene axiale Bohrungen aufweist.

7. Strömungsarbeitsmaschine nach Anspruch 1,
**dadurch gekennzeichnet,**
**dass** die Welle (4) hohl als Kühlfluidleitung ausgebildet ist.

8. Strömungsarbeitsmaschine nach einem der Ansprüche 1 bis 7,
**dadurch gekennzeichnet,**
**dass** das Laufrad von einer elektrischen Maschine angetrieben ist.

9. Strömungsarbeitsmaschine nach Anspruch 8,
**dadurch gekennzeichnet,**
**dass** die das Kühlfluid zusätzlich zur Kühlung der elektrischen Maschine eingesetzt ist.

10. Verwendung einer Strömungsmaschine nach einem der vorhergehenden Ansprüche,
**dadurch gekennzeichnet,**
**dass** die Strömungsmaschine mit einer elektrischen Maschine (8) und einem Turbinenrad (17) zur einem elektrischen Turbolader (16) kombiniert wird.

11. Verwendung nach Anspruch 10,
**dadurch gekennzeichnet,**
**dass** der elektrische Turbolader (16) zur Oxidationsmittelversorgung eines Brennstoffzellensystems genutzt wird.

## Claims

1. Fluid flow machine,
comprising a housing (1) and a connecting piece (10) for a working fluid (9) on an intake side and a discharge side,
at least one impeller (3) mounted on a shaft (4) which is held in the housing (1) with radial bearings (5, 6) and a thrust bearing (7),
and a cooling arrangement for at least one bearing (5-7),
**characterised in that**
a rotating part (13) of the thrust bearing (7) is designed as a coolant transport device, a suction connection leading to the intake side of the impeller (3).

2. Fluid flow machine according to claim 1,
**characterised in that**
the part (13) is disc-shaped and non-rotatably mounted on the shaft (4).

3. Fluid flow machine according to claim 2,
**characterised in that**
the disc (13) comprises passages (14) for conveying the fluid (9).

4. Fluid flow machine according to claim 3,
**characterised in that**
the fluid flows in a predominantly radial direction through the passages (14).

5. Fluid flow machine according to claim 2,
**characterised in that**
the disc (13) comprises radial bores (14) for conveying the fluid (9).

6. Fluid flow machine according to claim 2,
**characterised in that**
the disc (13) further comprises axial bores connected to the radial bores (14) for conveying the fluid (9).

7. Fluid flow machine according to claim 1,
**characterised in that**
the shaft (4) is designed hollow to serve as a coolant line.

8. Fluid flow machine according to any of claims 1 to 7,
**characterised in that**
the impeller is driven by an electric machine.

9. Fluid flow machine according to claim 8,
**characterised in that**
the coolant is in addition used to cool the electric machine.

10. Application of a fluid flow machine according to any of the preceding claims,
**characterised in that**
the fluid flow machine is combined with an electric machine (8) and a turbine wheel (17) to form an electric turbocharger (16).

11. Application according to claim 10,
**characterised in that**
the electric turbocharger (16) is used for the oxidant supply of a fuel cell system.

## Revendications

1. Pompe à déplacement non positif avec un carter (1) et des tubulures de raccordement (10) pour un fluide de travail (9) sur un côté d'aspiration et sur un côté de pression, avec au moins une roue mobile (3) sur un arbre (4) qui est maintenu dans le carter (1) par des paliers radiaux (5, 6) et par un palier axial (7), et avec un dispositif de refroidissement pour au moins un palier (5-7), **caractérisée en ce qu'**une partie entourante (13) du palier axial (7) est conçue comme dispositif de transport de fluide de refroidissement, une liaison d'aspiration menant vers le côté d'aspiration de la roue mobile (3).

2. Pompe à déplacement non positif selon la revendication 1, **caractérisée en ce que** la partie (13) est conçue en forme de disque et est disposée solidaire en rotation sur l'arbre (4).

3. Pompe à déplacement non positif selon la revendication 2, **caractérisée en ce que** le disque (13) présente des canaux (14) qui transportent le fluide.

4. Pompe à déplacement non positif selon la revendication 3, **caractérisée en ce que** les canaux (14) sont traversés principalement de manière radiale.

5. Pompe à déplacement non positif selon la revendication 2, **caractérisée en ce que** le disque (13) présente des alésages radiaux (14) qui transportent le fluide (9).

6. Pompe à déplacement non positif selon la revendication 2, **caractérisée en ce que** le disque (13) présente en outre des alésages axiaux reliés aux alésages radiaux (14) qui transportent le fluide (9).

7. Pompe à déplacement non positif selon la revendication 1, **caractérisée en ce que** l'arbre (4) est conçu comme une conduite de fluide de refroidissement.

8. Pompe à déplacement non positif selon l'une quelconque des revendications 1 à 7, **caractérisée en ce que** la roue mobile est entraînée par une machine électrique.

9. Pompe à déplacement non positif selon la revendication 8, **caractérisée en ce que** le fluide de refroidissement est en outre utilisé pour le refroidissement de la machine électrique.

10. Utilisation d'une pompe à déplacement non positif selon l'une quelconque des revendications précédentes, **caractérisée en ce que** la pompe à déplacement non positif avec une machine (8) électrique et une roue (17) de turbine est associée à un turbocompresseur (16) électrique.

11. Utilisation selon la revendication 10, **caractérisée en ce que** le turbocompresseur (16) électrique est utilisé pour l'alimentation en agent oxydant d'un système de cellules à combustible.
